(19) **Europäisches Patentamt European Patent Office Office européen des brevets**

(11) **EP 3 790 328 A1**

(12) **EUROPEAN PATENT APPLICATION**

(43) Date of publication:
**10.03.2021 Bulletin 2021/10**

(51) Int Cl.:
*H04W 64/00* (2009.01)     *G01S 5/14* (2006.01)

(21) Application number: **20194450.1**

(22) Date of filing: **03.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2019 EP 19382753**

(71) Applicant: **Rokubun S.L.**
**08018 Barcelona (ES)**

(72) Inventors:
- **Garcia Fernandez, Miquel**
  **08740 Sant Andreu de la Barca (ES)**
- **Banque Casanovas, Francesc Xavier**
  **08012 Barcelona (ES)**

(74) Representative: **ZBM Patents - Zea, Barlocci & Markvardsen**
**Rambla Catalunya, 123**
**08008 Barcelona (ES)**

(54) **GEOLOCATING WIRELESS ACCESS POINTS**

(57)    The present disclosure relates to a method of obtaining data associated with a wireless access point by means of a wireless device connected to the wireless access point through a wireless network, the wireless device comprising a geolocation module. The method comprises the wireless device obtaining its geolocation data using the geolocation module, when the wireless device is within the range of a geolocation system; the wireless device obtaining Travel time measurements of one or more signals sent from the wireless device to the wireless access point through the wireless network; or physical distance measurements from the obtained Travel time measurements; the distance or Travel time measurements being obtained at the same time as the geolocation data. The ultimate goal of the method is the generation of an accurate geolocated wireless access point data base for its further use in positioning applications.

FIG.1

**Description**

The present disclosure relates to methods and systems for geolocating Wireless Access Points.

BACKGROUND

The positioning of Wireless Access Points is beginning to be important in many levels. For example, the need to generally control access points position changes made by users, wireless network providers, authorities, etc. has become important to keep track of changing environments within wireless networks. Typical parameters used to position a wireless access point include its MAC (BSSID) address.
In recent years, another way for positioning wireless access points has been introduced, based on measuring the intensity of the received signal (received signal strength indication or RSSI) between the access point and any mobile device within the network, and subsequently using the "fingerprinting" method.
However, when positioning a wireless access point, whether using parameters (e.g. MAC address) previously introduced into a database, or using RSSI measurements made with mobile devices, the accuracy is still not good enough for many services. In particular, for mobile device positioning services, approximations of the wireless access point's position are done of the order of hundreds of meters. Also, these techniques may introduce errors due to human mistakes, or because RSSI measurements are very sensitive to the environment (i.e. walls, vehicles, vegetation, etc.) and not very robust to different signal errors.
Consequently, there is a need for a method that at least partially solves the aforementioned problems.

SUMMARY

In a first aspect of the present disclosure, a method of obtaining geolocation data of a wireless access point is provided, by means of a data processing system, the data processing system having access to:

- a first repository of wireless device GNSS measurements;
- a second repository of wireless access point physical distance or Travel time measurements;

wherein the data comprised in the first and second repositories is obtained by means of a wireless device connected to the wireless access point through a wireless network, the wireless device comprising a geolocation module, and the wireless device performing the steps of:

- obtaining its GNSS measurements using the geolocation module, when the wireless device is within the range of a geolocation system;
- obtaining:

  • Travel time measurements of one or more signals sent from the wireless device to the wireless access point through the wireless network; or
  • physical distance measurements from the obtained Travel time measurements;

  the distance or Travel time measurements being obtained at the same time as the obtained GNSS measurements;
- storing the obtained GNSS measurements of the wireless device in the first repository of GNSS measurements; and/or
- storing the obtained distance or Travel time measurements in the second repository of wireless access point distance or Travel time measurements;

wherein the data processing system is remote from the wireless device, and wherein the method of obtaining geolocation data of a wireless access point comprises the steps of:

- the data processing system retrieving from the second repository at least three distance or Travel time measurements associated with the wireless access point;
- the data processing system retrieving from the first repository the GNSS measurements of the corresponding wireless device used to obtain the at least three distance or Travel time measurements;
- determining GNSS fixes of the wireless device based on the GNSS measurements retrieved from the first repository.
- for each retrieved Travel time measurement, the data processing system obtaining the physical distance between the corresponding wireless device and the wireless access point from the Travel time measurement;
- the data processing system obtaining geolocation data of the wireless access point from the distances and the GNSS fixes of the corresponding wireless device.

The data processing system may be, for example, a server remotely connected via a wireless network to the wireless device. Such server may have a higher computation capacity, which allows to run algorithms in a more efficient way than the computing means found in a wireless device. For example, a wireless device may be a GNSS receiver, or a smartphone comprising a geolocation module such as a GNSS receiver or similar modules (i.e. a geolocation app such as, for example, Google maps). Such geolocation modules have a low accuracy, since they are limited by the wireless device computation capacity (for example, the processor of a smartphone), and use the primary GNSS measurements received from satellites (time of reception of satellite signal (GNSS signal), time of transmission of satellite signal (GNSS signal), and pseudo ranges) to determine GNSS fixes of the corresponding wireless device.

Furthermore, the data processing system may be able to connect to other repositories or servers and retrieve other measurements or data about, for example, the transmission conditions of the GNSS measurements received from the wireless device, in order to determine in a more accurate way the GNSS fixes of each wireless device.

Also, wireless devices usually perform calculations of GNSS fixes with low accuracy due to their limited computing capacity. For example, GNSS fixes usually perform GNSS calculations by means of Single Point Positioning algorithms. Said algorithms only use pseudo ranges GNSS measurements in a given instant T, in order to estimate single a GNSS fix (the location of the device usually in x,y,z form). Said GNSS fixes are obtained independently in each instant, therefore an epoch (or GNSS fix) is independent of the previous obtained epochs. Furthermore, Single Point Positioning has an accuracy of several meters (typically 10 meters), although it may vary in between devices.

According to an example, the data comprised in the first and second repositories may be obtained by means of at least two wireless devices connected to the wireless access point through a wireless network, and the data processing system may retrieve data from the first and second repositories, corresponding to the two wireless devices.

Therefore, according to said example, the data processing system may be a common data processing system to determine the GNSS fixes of all the wireless devices used to obtain geolocation data of a wireless access point. The advantages of using a common (i.e. centralized) data processing system to process the GNSS measurements from different wireless devices may be the homogeneity of the resulting GNSS fixes. In systems wherein the GNSS fixes are calculated separately in each wireless device (for example, in smartphone terminals), the accuracy of GNSS fixes received in a data processing system may depend on the calculation performed in each wireless device. Thus, different wireless devices may perform different calculations with different levels of accuracy. By calculating the GNSS fixes of the wireless devices in a data processing system based on each received GNSS measurements, a consistent level of accuracy may be obtained in the resulting fixes for all the involved wireless devices.

Therefore, by using the example of the method according to the present disclosure, all the resulting GNSS fixes may be homogeneous, which makes the computation of the geolocation of a wireless device more robust. Also, it is possible to perform advanced processing strategies which take into account other features and/or measurements besides pseudo ranges.

According to another example, the data comprised in the first and second repositories may be obtained from a single wireless device located in different positions. In such case, the data from the first and second repositories may be obtained from the same wireless device which, for example, has been moving, i.e. changing its location. Therefore, the GNSS measurements and Travel time measurements or physical distance measurements from the obtained Travel time measurements, may have been obtained when the wireless device was in different locations.

According to another example, the determining of the GNSS fixes of the wireless device may be performed by calculating the GNSS fixes using at least one of the following type of GNSS fix calculations:

- Data editing algorithms;
- Precise Point Positioning algorithms;
- Real Time Kinematic algorithms;
- Post Processing Kinematic algorithms.

More specifically, the following GNSS fix calculation methods or processing techniques (commonly known as navigation filters) may be used to calculate GNSS fixes based on GNSS measurements:

- Data editing and pre-processing algorithms: these algorithms are performed on the measurements before the actual calculation, and they monitor possible errors in the GNSS measurements themselves. The data editing may comprise flagging (or outlayering) GNSS measurements which may not be within an expected range of values. For example, if a distance measurement (pseudo range) is negative or unusually high (this may be detected, for example, by knowing the expected distances of the satellites), the measurement may be flagged, in order for the GNSS fix calculation method to lower its weight in the calculation or to reject it. Another example is in the case wherein the GNSS measurements are a data related to the Carrier-phase: in such case, the carrier phase is discontinuous (for example, the wireless device suffers a loss of lock with a satellite when entering a tunnel), a flag is performed on the affected data, so the GNSS fix calculation method takes into account the phase break occurred in that instant. By performing a data editing algorithm prior to a navigation filter, the result of the navigation filter may be improved.

- Precise Point Positioning (PPP): it is an example of a calculation method wherein the pseudo ranges are combined with carrier-phase measurements (which have a lower noise than pseudo ranges) and external Space State Representation (SSR) corrections (precise orbits and clocks and, potentially, ionospheric and tropospheric corrections) to achieve accuracies in the order of centimeters. This calculation method may further comprise, for example, a method known as Uncombined and Undifferenced Processing (UUP), where GNSS measurements are not combined to remove undesired effects such as the ionosphere, as it is traditionally done with the ionospheric-free combination in PPP algorithms. Considering the increase in GNSS signals and frequencies, this approach allows a greater flexibility in terms of number of signals and frequency to process jointly. The UUP method may also allow to jointly process data from various receivers. This method may help lowering common errors such as ionosphere, troposphere, hardware biases and other similar ones. UUP may also particularly be useful to estimate the hardware bias of the WAP. An advantage of using UUP methods may be that the calculations are standalone, and no Internet connection may be required to perform such calculations (only the measurements from the wireless devices received by the data processing system).

- Real Time Kinematic (RTK): it is another example of a calculation method wherein the GNSS measurements from the wireless device is combined with other measurements of an external reference terminal (Observable State Representation, OSR) to cancel common errors and reach accuracies in the order of centimeters, with short convergence time. RTK, as a differential GNSS technique, may be used in such calculations, which combines measurements from a wireless devices with measurements from a fixed receiver (for example, a radio link, measurements from another remote device sent via Internet, etc...), eliminating the common errors of both measurements.

- Post Processing Kinematic algorithms: it is a post-processing version of the Real Time Kinematic calculation, performed after the GNSS fixes are calculated, to further cancel errors.

Therefore, by using advanced processing strategies such as the calculation methods described above (which are beyond the possibilities of most wireless devices, such as, for example, common smartphones), the determination of the GNSS fixes may be dramatically improved in terms of accuracy (up to, for example, 1 meter or less), which directly affects the accuracy of a resulting WAP geolocation.

Also, by generally using a data processing system for determining the GNSS fixes of a wireless device, the calculation may be easily refined with new features and calculation methods to improve the determining of the resulting GNSS fixes. Therefore, by updating the GNSS fix calculation method using a continuous integration and deployment system, new and improved calculation methods may be easily updated by applying them (whenever needed) simultaneously for all the wireless devices involved, instead of updating the calculations in each wireless device app or computing means separately.

Furthermore, the GNSS fixes calculation methods may also be performed offline (for example, minutes after the measurements were obtained), regardless of when the data was stored in the first and second repositories.

Also, according to a further example, the determining of the GNSS fixes of the at least two wireless devices may be performed by calculating the GNSS fixes using a common GNSS fix calculation method for each wireless device.

According to a further example of the present disclosure, GNSS fixes may comprise data representing the location or velocity of a wireless device at a specific time. Examples of GNSS fixes may be, for example, the latitude, longitude and/or height, Cartesian coordinates (XYZ) referenced to an Earth Centered Earth Fixed reference system, etc...

According to another example of the present disclosure, geolocation data of a wireless device may comprise GNSS measurements (otherwise known as GNSS observables). Such measurements may be navigation satellites measurements collected by the wireless device (for example, smartphones or GNSS receivers with Internet connectivity).

More specifically, such measurements may comprise, for example: time of reception of satellite signal (GNSS signal), time of transmission of satellite signal (GNSS signal), pseudo range (which is (t_reception - t_transmission) * c), carrier-phase measurement, Doppler, C/N0 (carrier noise). In addition, it could also be the Intermediate Frequency (IF) samples of the In-phase and Quadrature components of the GNSS signal. These samples are the ones typically collected by GNSS front-end and Software Defined Radio systems.

According to another aspect of the present disclosure, a data processing system for obtaining geolocation data of a wireless access point is provided, the data processing system comprising:

- a communications module configured to access to:

- a first repository of wireless device GNSS measurements;
- a second repository of wireless access point physical distance or Travel time measurements;

wherein the data comprised in the first and second repositories is obtained by means of a wireless device connected to the wireless access point through a wireless network, the wireless device comprising a geolocation module, and the wireless device performing the steps of:

- obtaining its GNSS measurements using the geolocation module, when the wireless device is within the range of a geolocation system;
- obtaining:

  - Travel time measurements of one or more signals sent from the wireless device to the wireless access point through the wireless network; or
  - physical distance measurements from the obtained Travel time measurements;

the distance or Travel time measurements being obtained at the same time as the obtained GNSS measurements;

the data processing system being configured to:

- retrieve from the second repository at least three distance or Travel time measurements associated to the wireless access point;
- retrieve from the first repository the GNSS measurements of the corresponding wireless device used to obtain the at least three distance or Travel time measurements;
- for each retrieved Travel time measurement, obtain the physical distance between the corresponding wireless device and the wireless access point from the Travel time measurement;
- obtain geolocation data of the wireless access point from the distances and the GNSS fixes of the corresponding wireless device.

According to a further example, the data comprised in the first and second repositories may be obtained by means of at least two wireless devices connected to the wireless access point through a wireless network, and wherein the data processing system retrieves data from the first and second repositories, may correspond to the two wireless devices.

According to another example, a method of geolocating a mobile device within an indoor environment is provided, the mobile device being connected to at least three wireless access points through a wireless network, the mobile device having access to:

- a third repository of wireless access point geolocation data, wherein data comprised in the third repository being obtained by the previously described method of obtaining geolocation data of wireless access points;

the method of geolocating the mobile device within an indoor environment comprising:

- the mobile device retrieving, from the third repository, geolocation data of at least three wireless access points to which the mobile device is connected;
- the mobile device obtaining its geolocation by triangulating the position of the mobile itself from the retrieved geolocation data of the at least three wireless access points.

Furthermore, according to another example, a mobile device for geolocating itself within an indoor environment is provided, the mobile device comprising:

- a first communications module configured to connect the mobile device to wireless access points that are within the range of the mobile device through a wireless network;
- a second communications module configured to access to a third repository of wireless access point geolocation data, wherein data comprised in the third repository being obtained by a data processing system, as previously described, for obtaining geolocation data of wireless access points ;

the mobile device being configured to:

- retrieve, from the third repository, geolocation data of at least three wireless access points to which the mobile device is connected;

- obtain its geolocation by triangulating the position of the mobile itself from the retrieved geolocation data of the at least three wireless access points.

According to a further example of the present disclosure, a method of geolocating a mobile device within an outdoor environment is provided, the mobile device being connected to at least three wireless access points through a wireless network, the mobile device having access to:

- a third repository of wireless access point geolocation data, wherein data comprised in the third repository being obtained by the previously described method of obtaining geolocation data of wireless access points;

the method of geolocating the mobile device within an outdoor environment comprising:

- the mobile device retrieving, from the third repository, geolocation data of at least three wireless access points to which the mobile device is connected;
- the mobile device obtaining GNSS measurements of itself if a geolocation module comprised in the mobile device is within the range of a geolocation system;
- the mobile device obtaining its geolocation by combining both GNSS measurements obtained by its geolocation module and the retrieved geolocation data of the wireless access points.

According to another example, a mobile device for geolocating itself within an outdoor environment is provided, the mobile device comprising:

- a first communications module configured to connect the mobile device to wireless access points through a wireless network;
- a second communications module configured to access to a third repository of wireless access point geolocation data, wherein data comprised in the third repository being obtained by a data processing system, as previously described, for obtaining geolocation data of wireless access points;

the mobile device being configured to:

- retrieve, from the third repository, geolocation data of at least three wireless access points to which the mobile device is connected;
- obtain GNSS measurements of itself if a geolocation module comprised in the mobile device is within the range of a geolocation system;

obtain its geolocation by combining both GNSS measurements obtained by its geolocation module and the retrieved geolocation data of the wireless access points.

In another aspect, a method of obtaining data associated with a wireless access point is provided. Data may be obtained by means of a wireless device. The wireless device may be connected to the wireless access point through a wireless network. The wireless device may comprise a geolocation module. The method may comprise:

- the wireless device obtaining its geolocation data using the geolocation module, when the wireless device is within the range of a geolocation system;
- the wireless device obtaining:

  • Travel time measurements of one or more signals sent from the wireless device to the wireless access point through the wireless network; or
  • physical distance measurements from the obtained Travel time measurements;

the distance or Travel time measurements being obtained at the same time as the geolocation data.

This way, a wireless device may obtain data from wireless access points surrounding it (wireless access points within the range of the wireless device), that is, information about the physical surroundings of the wireless device in a very accurate way. Said information helps position the wireless access points in a very accurate way.

Specifically, a very accurate data of wireless access points is obtained, by combining an obtained geolocation position of a wireless device with the physical distances of said wireless device from one or more wireless access points. The use of the travel time measurements or physical distances obtained from said travel time measurements (instead of other measurements, such as RSSI measurements, typically used to position wireless devices which are within range of one or more wireless access points) allows a data processing system to geolocate more accurately the corresponding wireless access points as will be described later.

In some examples, the method of obtaining data associated with a wireless access point may comprise the wireless device time stamping its obtained geolocation data with the time when the geolocation data is obtained. Such time stamping helps relate the geolocation data obtained through the geolocation module of the wireless device, with the corresponding travel time measurements and/or the physical distance measurements, which are obtained at the same time as the geolocation data. When the method is repeated within a period of time, big amounts of data may be generated, thus a timestamp in the geolocation data may help relating it with the corresponding measurements, within a big amount of obtained data.

Furthermore, in some examples, the distance or Travel time measurements may be obtained by using at least one of the following parameters:

- a Time of Arrival (ToA) parameter;
- a Time difference of Arrival (TdoA) parameter;
- a Round Trip Time (RTT) parameter.

For example, from Android P version onwards, new ranges based on WiFi ToA from WiFi routers are available. The accuracy of such measurements lies in the meter level. Ranges based on ToA instead of the RSSI have a much greater level of accuracy and robustness, which may improve, for example, indoor positioning, where GNSS signals is clearly impaired.

In some examples, the obtained geolocation data of the wireless device may comprise at least one of the following data:

- data relating to pseudo-ranges;
- data relating to the carrier phase range;
- data relating to Doppler frequency;
- data relating to Signal-to-Noise ratio or Carrier-to-Noise ratio;
- geolocation coordinates of the wireless device.

According to some examples, the method of obtaining data associated with a wireless access point may comprise the wireless device storing the obtained geolocation data of the wireless device in a first repository of wireless device geolocation data.

In some examples, the method of obtaining data associated with a wireless access point may comprise the wireless device storing the obtained distance or Travel time measurements in a second repository of wireless access point distance or Travel time measurements.

Such repositories may be separate or may be combined into a single repository (a repository of geolocated distance or Travel time measurements) and/or may be embodied in (separately or combined), for example, a database-type repository.

In some examples, the method may comprise the wireless device searching for wireless access points within its range in order to obtain distance or Travel time measurements from them.

This way, the obtaining of the data of the wireless access points may be performed in a continuous way, and an up to date data may be obtained. Thus, changes on the wireless device's location or changes of position of wireless access points (for example, after maintenance of the wireless access point, it may have been moved from its original place) are taken into account if the method is performed in a continuous way.

According to a further aspect, a non-transitory computer program product is provided. The non-transitory computer program product may cause a wireless device to perform the previously described method of obtaining data associated to a wireless access point. Such non-transitory computer program product may be embodied on a storage medium (for example, a CD-ROM, a DVD, a USB drive, on a computer memory or on a read-only memory) or carried on a carrier signal (for example, on an electrical or optical carrier signal).

According to another aspect, a wireless device for obtaining data associated with a wireless access point is provided. The wireless device may be connected to the wireless access point through a wireless network. The wireless device may comprise:

- a communications module configured to connect the wireless device to the wireless access point through a wireless network;
- a geolocation module configured to obtain geolocation data of the wireless device when it is within the range of a geolocation system;
- means for obtaining:

◦ Travel time measurements of one or more signals sent by means of the communications module from the wireless device to the wireless access point through the wireless network; or
◦ distance measurements from the obtained Travel time measurements;
the distance or Travel time measurements being obtained at the same time as the geolocation data.

According to yet another aspect, a wireless device for obtaining data associated with a wireless access point is provided. The wireless device may be connected to the wireless access point through a wireless network. The wireless device may comprise:

- a communications module configured to connect the wireless device to the wireless access point through a wireless network;
- a geolocation module configured to obtain geolocation data of the wireless device when it is within the range of a geolocation system;

the wireless device being configured to:

- obtain geolocation data using the geolocation module;
- obtain:

  • Travel time measurements of one or more signals sent by means of the communications module from the wireless device to the wireless access point through the wireless network; or
  • distance measurements from the obtained Travel time measurements; the distance or Travel time measurements being obtained at the same time as the geolocation data.

In another aspect, a wireless device for obtaining data associated with a wireless access point is provided. The wireless device may be connected to the wireless access point through a wireless network. The wireless device may comprise:

- a communications module configured to connect the wireless device to the wireless access point through a wireless network;
- a geolocation module configured to obtain geolocation data of the wireless device when it is within the range of a geolocation system;
- a memory and a processor, embodying instructions stored in the memory and executable by the processor, the instructions comprising functionality to execute the previously described method of obtaining data associated to a wireless access point.

In some examples, the wireless device may be selected from:

- a smartphone;
- a tablet;
- an Internet of Things (IoT) device;
- a GNSS receiver;
- an Electronic Control Unit (ECU) of a vehicle.

According to some examples, the wireless network may be selected from:

- a WiFi network;
- a mobile communications network such as 3G, 4G or 5G;
- a Bluetooth type network;
- a Radio-Frequency (RF) wireless network.

According to a further aspect, a method of obtaining geolocation data of a wireless access point is provided. The geolocation data may be obtained by means of a data processing system. The data processing system may have access to a first repository of wireless device geolocation data and to a second repository of wireless access point physical distance or Travel time measurements. Data comprised in the first and second repositories may be obtained by the previously described method of obtaining data associated with wireless access points. The method of obtaining geolocation data of a wireless access point may comprise:

- the data processing system retrieving from the second repository at least three distance or Travel time measurements associated with the wireless access point;
- the data processing system retrieving from the first repository the geolocation data of the corresponding wireless devices used to obtain the at least three distance or Travel time measurements;
- for each retrieved Travel time measurement, the data processing system obtaining the physical distance between the corresponding wireless device and the wireless access point from the Travel time measurement;
- the data processing system obtaining geolocation data of the wireless access point from the distances and the retrieved geolocation data of the corresponding wireless devices.

This way, a very accurate geolocation of the wireless access points is achieved, by combining a given geolocation position of a wireless device with the physical distances of said wireless device from one or more wireless access points. The use of Travel time measurements or physical distances obtained from said Travel time measurements (instead of other measurements, such as RSSI measurements, typically used to position wireless devices which are within range of one or more wireless access points) allows the data processing system to geolocate more accurately the corresponding wireless access points.

Also, the methods normally performed to obtain geolocation data involve communicating with a geolocation system, such as, for example, GNSS or GPS, which need a direct vision range with more than one satellite. Thus, it is difficult to use such systems to obtain geolocation data in an indoors environment.

However, by performing the method according to the present invention, it is possible to obtain geolocation data of a wireless access point that may be indoors, with high accuracy. Such case may be, for example, when the wireless device is within the range of a geolocation system and is also within range of one or more wireless access points, and the repositories previously described. For example, the wireless device may be outdoors but near an indoors environment (for example, a building) where the wireless access points may be located.

At this point it is important to note that the data processing system may be a wireless device used to obtain data associated with a wireless access point, as described above. That is, the same wireless device may obtain data associated with a wireless access point and obtain the geolocation data of a wireless access point.

According to some examples, the method of obtaining geolocation data of a wireless access point may comprise the data processing system storing the obtained geolocation data of the wireless access point in a third repository of wireless access point geolocation data.

Such repository may be, for example, a database type repository, and may be embedded in combination of any of the previously described repositories.

In some examples, the obtained geolocation data of the wireless access point may comprise the geolocation coordinates of the wireless access point.

According to a further aspect, a non-transitory computer program product is provided. The non-transitory computer program product may cause a data processing system to perform the previously described method of obtaining geolocation data of a wireless access point. Such non-transitory computer program product may be embodied on a storage medium (for example, a CD-ROM, a DVD, a USB drive, on a computer memory or on a read-only memory) or carried on a carrier signal (for example, on an electrical or optical carrier signal).

According to a further aspect, a data processing system for obtaining geolocation data of a wireless access point is provided. The data processing system may comprise:

- a communications module configured to access to:

  • a first repository of wireless device geolocation data;
  • a second repository of wireless access point physical distance or Travel time measurements;

  wherein data comprised in the first and second repositories being obtained by at least one wireless device for obtaining data associated with wireless access points as previously described;
- means for retrieving from the second repository at least three distance or Travel time measurements associated with the wireless access point;
- means for retrieving from the first repository the geolocation data of the corresponding wireless devices used to obtain the at least three distance or Travel time measurements;
- means for obtaining, for each obtained Travel time measurement, the physical distance between the corresponding wireless device and the wireless access point from the Travel time measurement;
- means for obtaining geolocation data of the wireless access point from the distances and the retrieved geolocation data of the corresponding wireless devices.

Such first and second repositories may be, for example, a database type repository, and may be embedded in any combination possible in a single repository. For example, first and second repositories may be the same repository.

According to another aspect, a data processing system for obtaining geolocation data of a wireless access point is provided. The data processing system may comprise:

- a communications module configured to access to:

  • a first repository of wireless device geolocation data;
  • a second repository of wireless access point physical distance or Travel time measurements;

  wherein data comprised in the first and second repositories being obtained by at least one wireless device for obtaining data associated with wireless access points as previously described;

the data processing system being configured to:

- retrieve from the second repository at least three distance or Travel time measurements associated to the wireless access point;
- retrieve from the first repository the geolocation data of the corresponding wireless devices used to obtain the at least three distance or Travel time measurements;
- obtain, for each obtained Travel time measurement, the physical distance between the corresponding wireless device and the wireless access point from the Travel time measurement;
- obtain geolocation data of the wireless access point from the physical distances and the retrieved geolocation data of the corresponding wireless devices.

In another aspect, a data processing system for obtaining geolocation data of a wireless access point is provided. The data processing system may comprise:

- a communications module configured to access to:

  • a first repository of wireless device geolocation data;
  • a second repository of wireless access point physical distance or Travel time measurements;

  wherein data comprised in the first and second repositories being obtained by at least one wireless device for obtaining data associated with wireless access points as previously described;
- a memory and a processor, embodying instructions stored in the memory and executable by the processor, the instructions comprising functionality to execute a method of obtaining geolocation data of a wireless access point as previously described.

It is important to highlight that a data processing system may be a wireless device as described above.

According to a further aspect, a method of geolocating a mobile device within an indoor environment is provided. The mobile device may be connected to at least three wireless access points through a wireless network. The mobile device may have access to a third repository of wireless access point geolocation data, wherein data comprised in the third repository being obtained by a method of obtaining geolocation data of wireless access points as previously described. The method of geolocating the mobile device within an indoor environment may comprise:

- the mobile device retrieving, from the third repository, geolocation data of at least three wireless access points to which the mobile device is connected;
- the mobile device obtaining its geolocation by triangulating the position of the mobile itself from the retrieved geolocation data of the at least three wireless access points.

This way, by performing this method, a very accurate geolocation of a mobile device can be obtained, in an indoor environment, wherein the wireless device may not be within range of a geolocation system, such as GNSS or GPS. Furthermore, the obtained geolocation of the mobile device can be updated by performing the method repeatedly, retrieving geolocation data of wireless access points from the third repository, which may be updated continuously by performing the method of obtaining geolocation data of a wireless access points continuously.

According to a further aspect, a non-transitory computer program product is provided that causes a mobile device to perform the previously described method of geolocating a mobile device within an indoor environment. Such non-transitory computer program product may be embodied on a storage medium (for example, a CD-ROM, a DVD, a USB drive, on a computer memory or on a read-only memory) or carried on a carrier signal (for example, on an electrical or optical carrier signal).

According to a further aspect of the invention, a mobile device for geolocating itself within an indoor environment is provided. The mobile device may comprise:

-    a first communications module configured to connect the mobile device to wireless access points that are within the range of the mobile device through a wireless network;
-    a second communications module configured to access to a third repository of wireless access point geolocation data, wherein data comprised in the third repository being obtained by a data processing system for obtaining geolocation data of wireless access points as previously described;
-    means for retrieving, from the third repository, geolocation data of at least three wireless access points to which the mobile device is connected;
-    means for obtaining its geolocation by triangulating the position of the mobile itself from the retrieved geolocation data of the at least three wireless access points.

In another aspect, a mobile device for geolocating itself within an indoor environment is provided. The mobile device may comprise a first communications module configured to connect the mobile device to wireless access points that are within the range of the mobile device through a wireless network and a second communications module configured to access to a third repository of wireless access point geolocation data, wherein data comprised in the third repository being obtained by a data processing system for obtaining geolocation data of wireless access points as previously described. The mobile device may be configured to:

-    retrieve, from the third repository, geolocation data of at least three wireless access points to which the mobile device is connected;
-    obtain its geolocation by triangulating the position of the mobile itself from the retrieved geolocation data of the at least three wireless access points.

According to a further aspect, a mobile device for geolocating itself within an indoor environment is provided. The mobile device may comprise:

-    a first communications module configured to connect the mobile device to wireless access points that are within the range of the mobile device through a wireless network;
-    a second communications module configured to access to a third repository of wireless access point geolocation data, wherein data comprised in the third repository being obtained by a data processing system for obtaining geolocation data of wireless access points as previously described;
-    a memory and a processor, embodying instructions stored in the memory and executable by the processor, the instructions comprising functionality to execute a method of geolocating a mobile device within an indoor environment as previously described.

According to another aspect, a method of geolocating a mobile device within an outdoor environment is provided. The mobile device may be connected to at least three wireless access points through a wireless network. The mobile device may have access to a third repository of wireless access point geolocation data, wherein data comprised in the third repository being obtained by a method of obtaining geolocation data of wireless access points as previously described. The method of geolocating the mobile device within an outdoor environment may comprise:

-    the mobile device retrieving, from the third repository, geolocation data of at least three wireless access points to which the mobile device is connected;
-    the mobile device obtaining geolocation data of itself if a geolocation module comprised in the mobile device is within the range of a geolocation system;
-    the mobile device obtaining its geolocation by combining both geolocation data obtained by its geolocation module and the retrieved geolocation data of the wireless access points.

Thus, by performing this method, a mobile device within the range of a geolocation system and within reach of the third repository can obtain its own geolocation combining both data. Normally, a mobile device found outdoors may obtain its geolocation by means of a geolocation system (for example, a GNSS or a GPS system) alone, but in urban areas that geolocation may not be very accurate because of interferences with urban elements such as buildings, cars, etc. Therefore, a more accurate geolocation can be obtained by combining geolocation data obtained through the geolocation system and geolocation data of at least three wireless access points within reach of the mobile device (for example, when a user is walking on the street, it may be within reach of wireless access points found inside buildings nearby).

This method may be performed continuously, while the user carrying the mobile device is, for example, walking on a street, thus enabling to hop from a wireless access point to another while the mobile device enters the reach of a new wireless access point, or loses connection with another wireless access point, always keeping a very accurate geolocation of itself by performing said method.

Furthermore, such third repository may be, for example, a database type repository, and may be embedded in any combination possible with the previously described repositories within a single repository.

According to a further aspect of the invention, a non-transitory computer program product is provided that causes a mobile device to perform the previously described method of geolocating a mobile device within an outdoor environment. Such non-transitory computer program product may be embodied on a storage medium (for example, a CD-ROM, a DVD, a USB drive, on a computer memory or on a read-only memory) or carried on a carrier signal (for example, on an electrical or optical carrier signal).

According to a further aspect, a mobile device for geolocating itself within an outdoor environment is provided. The mobile device may comprise:

- a first communications module configured to connect the mobile device to wireless access points through a wireless network;
- a second communications module configured to access to a third repository of wireless access point geolocation data, wherein data comprised in the third repository being obtained by a data processing system for obtaining geolocation data of wireless access points as previously described;
- means for retrieving, from the third repository, geolocation data of at least three wireless access points to which the mobile device is connected;
- a geolocation module configured to obtain geolocation data of the mobile device if the geolocation module is within the range of a geolocation system;
- means for obtaining the geolocation of the mobile device by combining both geolocation data obtained by its geolocation module and the retrieved geolocation data of the wireless access points.

In another aspect, a mobile device for geolocating itself within an outdoor environment is provided. The mobile device may comprise a first communications module configured to connect the mobile device to wireless access points through a wireless network and a second communications module configured to access to a third repository of wireless access point geolocation data, wherein data comprised in the third repository being obtained by a data processing system for obtaining geolocation data of wireless access points as previously described. The mobile device may be configured to:

- retrieve, from the third repository, geolocation data of at least three wireless access points to which the mobile device is connected;
- obtain geolocation data of itself if a geolocation module comprised in the mobile device is within the range of a geolocation system;
- obtain its geolocation by combining both geolocation data obtained by its geolocation module and the retrieved geolocation data of the wireless access points.

According to a further aspect, a mobile device for geolocating itself within an outdoor environment is provided. The mobile device may comprise:

- a first communications module configured to connect the mobile device to wireless access points through a wireless network;
- a second communications module configured to access to a third repository of wireless access point geolocation data, wherein data comprised in the third repository being obtained by a data processing system for obtaining geolocation data of wireless access points as previously described;
- a memory and a processor, embodying instructions stored in the memory and executable by the processor, the instructions comprising functionality to execute a method of geolocating a mobile device within an outdoor environment as previously described.

According to a further aspect, a system for geolocating a wireless access point is provided. The system may comprise:

- at least one wireless access point connected to a wireless network;
- a wireless device for obtaining data associated with a wireless access point as previously described, connected to the wireless access point through the wireless network;

- a data processing system for obtaining geolocation data of a wireless access point as previously described.

In some examples, the wireless device and the data processing system may be embedded in a single device.

In this case, the wireless device may be, for example, a mobile device which is configured to function as the wireless device and the data processing system. Also, in such case, the first and second repository may be embedded within the same repository, and such repository embedded within the mobile device in the form of, for example, a data buffer or a temporary computer memory such as a RAM memory.

This way, if such a mobile device is outdoors, and is within reach of one or more wireless access points from an indoors environment such as a building, it can obtain geolocation data of said wireless access point and store it within the repository found in itself. Afterwards, if the mobile device moves into the indoors environment (the building), it can use said wireless access point geolocation data found within the mobile device's repository to geolocate itself in an indoor environment. Therefore, there is no need to connect to an external repository, but the geolocation gathered by the mobile device can be stored in its own repository temporarily, to be used within a short period of time, once the mobile device is in the indoors environment where the wireless access points are.

BRIEF DESCRIPTION OF THE DRAWINGS

Non-limiting examples of the present disclosure will be described in the following, with reference to the appended drawings, in which:

Figure 1 illustrates an example of a system for geolocating a wireless access point.

Figure 2 illustrates another example of a system for geolocating a wireless access point.

DETAILED DESCRIPTION OF EXAMPLES

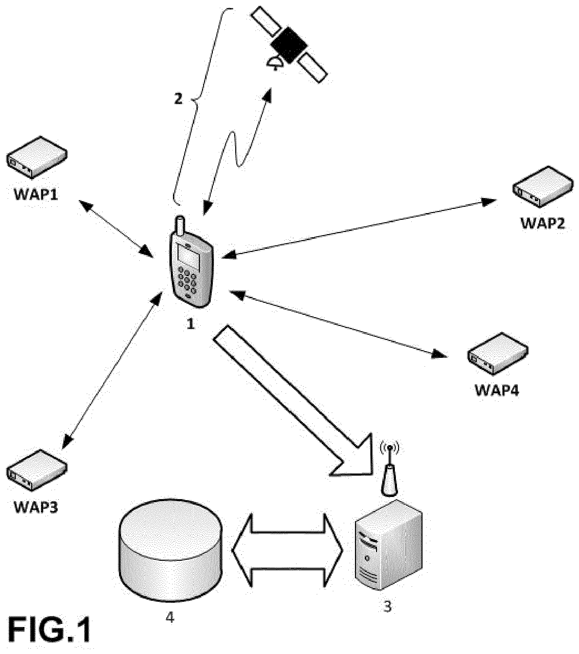

An example of a system for geolocating a wireless access point is shown in Figure 1. The system comprises at least one wireless device 1 able to transmit and receive data. The device 1 may be a static device or may be a mobile or portable device. In the example of Figure 1, the device 1 is a mobile device. Furthermore, the device 1 may obtain a Travel time measurement of at least a signal sent to another device or a physical distance from the obtained Travel time measurements, the another device being, in the present example, a wireless access point. The Travel time measurement of a signal may be obtained by using a ToA parameter (by combining it with the time when the signal was sent), or, in a similar way, with a TdoA parameter. A further possibility is to use a Round Trip Time (RTT) parameter. In this example, the device is a Round Trip Time (RTT) compatible device, able to connect with at least one wireless access point in a wireless network and obtain RTT measurements. Furthermore, the device 1 may also comprise a geolocation module 2 (such as, for example, GNSS) to be connected to a geolocation system.

Examples of mobile devices may be IoT devices, GNSS receivers, tablets, or, as in the example of a preferred embodiment of Figure 1, a smartphone 1. The smartphone 1 of the example of Figure 1 comprises an RTT compatible WiFi chipset, which allows the smartphone to connect to a wireless network, which in this example is a WiFi network. Furthermore, in the example of Figure 1, the smartphone 1 also comprises a geolocation module, which is a GNSS module 2.

A wireless access point (herein after referred as WAP) may be any networking hardware device that allows other wireless devices to connect to a wired or wireless network. Such network may be, for example, a mobile communications network (such as, for example, 4G, 5G, etc..), a Bluetooth type network, or an RF wireless network such as a WiFi network connected to a wired or wireless network. In the example of a WiFi network, the WAP usually connects to a router (via a wired or wireless network) as a standalone device, but it can also be an integral component of the router itself.

In the example of Figure 1, the at least one mobile device 1 is connected to a plurality of wireless access points through a wireless network. The wireless access points are RTT compatible devices and can be used to provide RTT measurements between the mobile devices and the wireless access points within the wireless network, using a protocol that comprises such RTT measurements within it. The wireless network may be any RF wireless network such as Bluetooth, Mobile communications (for example 4G, 5G, etc.) or, as in the example of Figure 1, a WiFi network. The wireless access points of the example of Figure 1 are WiFi access points (hereinafter referred to WAP1, WAP2, WAP3, WAP4).

Generally, an RTT compatible device is a device able to send and/or receive any data protocol that allows extracting or retrieving RTT measurements. An example of such protocol, used in the example of Figure 1, may be the IEEE 802.11mc protocol, which allows RTT measurements to be computed by any device (in the case of the present example, the mobile device 1 and the wireless access points WAP1, WAP2, WAP3, WAP4 compliant with said protocol).

If another parameter such as ToA or TdoA may be used to determine a Time Travel, another protocol may be used, wherein, for example, such parameter could be obtained.

The mobile device 1 (a smartphone in the present example) comprises means to perform Round Trip Time (RTT) measurements, which are embedded in a WAP geolocation app installed in the mobile device. This way, the mobile device 1 can request RTT measurements to each of the different WAPs it may be connected to (in the example of Figure 1, WAP1, WAP2, WAP3, WAP4, at any given time, through the wireless network.

Furthermore, the mobile device's 1 geolocation module 2 (which may be, for example, a GNSS positioning module), obtains geolocation data of the mobile device 1 at any time, and timestamps it with its epoch (the time when the data is obtained).

The geolocation data may comprise, at least, data relating to pseudo-ranges. It may also comprise data relating to the carrier phase range, Doppler frequency, Signal-to-Noise ratio or Carrier-to-Noise ratio, which can all be used, on their own or combined, to further obtain geolocation coordinates. Also, the geolocation data may even be the geolocation coordinates themselves (that is longitude, latitude and altitude).

The system also may comprise a data processing system, which may be embedded, in the example of Figure 1, in a Central Process Facility 3 (CPF), which is connected to the mobile device 1. If the mobile device 1 and the CPF 3 are close enough, they may be wired (for example, through Ethernet technology) or may be connected through short-range communication technologies, for example, Bluetooth (e.g. BLE - Bluetooth Low Energy), NFC, Zigbee or WiFi technology. If the mobile device 1 and the CPF 3 are far away, they may be connected through long-range wireless communication technologies such as GSM, GPRS, 3G, 4G, 5G or satellite technology or wired technologies (for example, through optical fiber, ADSL, etc.).

Also, the mobile device 1 further comprises means to send the obtained geolocation data of the mobile device, its epoch, and the corresponding obtained RTT measurements (obtained at the same time as the geolocation data), to the CPF 3. The means to send the geolocation data, epoch and the corresponding RTT measurements may be embedded within the same WAP geolocation app installed in the mobile device 1, or within a different app for each data, epoch and measurements, within the mobile device 1.

The system further comprises a data storing system, which may be connected to the CPF 3. The data storing system may be, in the example of Figure 1, a WAP geolocation Database 4 connected to the CPF 3.

The CPF 3, upon receiving the geolocation data of the mobile device, timestamp and RTT measurements from the mobile device 1, obtains the physical distance between said mobile device 1 and each wireless access point WAP1, WAP2, WAP3, WAP4, using the corresponding RTT measurements of each WAP (either calculating them from the corresponding RTT measurements or obtaining them from an intermediate app which may be already calculating and delivering the physical distance using said RTT measurements). Subsequently, the CPF 3 uses said obtained distances, and the geolocation data corresponding to the mobile device 1, to further obtain geolocation data of each WAP.

In some examples, the mobile device 1 may directly provide physical distance measurements to the CPF 3 from the obtained Travel time measurements.

The obtaining of geolocation data of a given WAP requires of, at least, three RTT measurements (noted as p) corresponding to said WAP. Said three RTT measurements should correspond to three different sets of geolocation data of a mobile device (or mobile devices), with their corresponding epochs.

The geolocation data of a mobile device could come from a single mobile device, which has obtained three different sets of geolocation data of itself (that is, for example, the mobile device has moved and has obtained the geolocation data of itself in three different positions, with their corresponding epoch and RTT measurements).

The geolocation data of a mobile device could come from two different mobile devices. For example, a first mobile device has obtained two different sets of geolocation data (in two different positions, with their corresponding epoch and RTT measurements), and a second mobile device has obtained its geolocation data (and corresponding epoch and RTT measurements) in a different position.

The geolocation data could also come from three different mobile devices, each device obtaining a different set of geolocation data of themselves, their epoch and their corresponding RTT measurements.

In summary, at least three RTT measurements are needed to estimate the WAP geolocation (three unknown parameters, one per each 3D geolocation coordinate of the WAP $(x_{tx}, y_{tx}, z_{tx})$).). We can define the distance in between a device and a WAP through the following geometric range formula:

$$\rho = \|\vec{r}_{tx} - \vec{r}_{rx}\| = \sqrt{(x_{tx} - x_{rx})^2 + (y_{tx} - y_{rx})^2 + (z_{tx} - z_{rx})^2}$$

Which defines a distance (derived from an RTT measurement (noted as)) between a device (or set of devices) with known positions (e.g. its own geolocation data, noted as a set of three geolocation coordinates of a position vector $\vec{r}_{rx} = (x_{rx}, yr_x, z_{rx})$ and a WAP (with a geolocation noted as a set of three geolocation coordinates of a position vector $\vec{r}_{tx} = (x_{tx}, y_{tx}, z_{tx})$.

The geometric range formula will be defined at least three times (one for each different set of RTT measurements and geolocation data of the mobile device or devices), and such a system of three equations will be used to estimate the WAP geolocation $\vec{r}_{tx}$ = ($x_{tx}$,$y_{tx}$,$z_{tx}$). The WAP geolocation to be estimated is the solution of this system of equations, that may be solved using several techniques.

A first example may involve the linearization of each equation (using, for example, a Taylor expansion), which requires a first estimation of a WAP geolocation to be introduced in such linearization.

Such first WAP geolocation estimation can be a position given by a Wireless Network provider (such as position of the WAP when it was first installed), or an approximate position of the WAP. To begin the linearization by Taylor expansion, a first WAP geolocation estimation could be approximated to, for example, the geolocation of the mobile device, i.e. it is estimated that they are in the same place, and the linearization uses that as a starting point to further estimate the final WAP geolocation. A first WAP geolocation estimation could also be approximated to an average geolocation of several mobile devices, i.e. it is estimated that the WAP is geolocated in an average position of the mobile devices. Finally, if several WAP geolocations have been obtained before (using the system of the example of Figure 1) and the system can retrieve them from a data storage system, the first WAP geolocation estimation could be approximated to a previously known WAP geolocation (which may or may not be different from the one to be finally estimated, i.e. the WAP may have changed its geolocation over time since the moment when the previously known WAP geolocation was obtained).

The first WAP geolocation estimation is defined as $\vec{r}_{tx,0}$ = ($x_{tx,0}$,$y_{tx,0}$,$z_{tx,0}$), and the first RTT measurement estimation between the device and the WAP in a first estimated geolocation is defined as:

$$\rho_0 = \left\| \vec{r}_{tx,0} - \vec{r}_{rx} \right\| = \sqrt{\left(x_{tx,0} - x_{rx}\right)^2 + \left(y_{tx,0} - y_{rx}\right)^2 + \left(z_{tx,0} - z_{rx}\right)^2}$$

Thus, each of the three geometric range formulas is linearized using Taylor expansions in the following way:

1. The original geometric range formula is:

$$\rho = \left\| \vec{r}_{tx} - \vec{r}_{rx} \right\| = \sqrt{(x_{tx} - x_{rx})^2 + (y_{tx} - y_{rx})^2 + (z_{tx} - z_{rx})^2}$$

2. And its linearization by Taylor expansions is:

$$\rho \approx \frac{x_{tx,0} - x_{rx}}{\left\| \vec{r}_{tx,0} - \vec{r}_{rx} \right\|} \cdot \Delta x + \frac{y_{tx,0} - y_{rx}}{\left\| \vec{r}_{tx,0} - \vec{r}_{rx} \right\|} \cdot \Delta y + \frac{z_{tx,0} - z_{rx}}{\left\| \vec{r}_{tx,0} - \vec{r}_{rx} \right\|} \cdot \Delta z$$

Wherein ($\Delta x, \Delta y, \Delta z$) are the estimations of differences between each position (WAP and device).

The set of equations (in this example three, but it could be performed with N equations, i.e. with N different sets of RTT measurements and geolocation data of a mobile device) can be defined by the N equations displayed in a matrix (for i = [1,$N$]) as the following:

$$\begin{pmatrix} \rho_{(1)} - \rho_{(1),0} \\ \vdots \\ \rho_{(N)} - \rho_{(N),0} \end{pmatrix} = \begin{pmatrix} p_{(1),x} & p_{(1),y} & p_{(1),z} \\ \vdots & \vdots & \vdots \\ p_{(N),x} & p_{(N),y} & p_{(N),z} \end{pmatrix} \cdot \begin{pmatrix} \Delta x \\ \Delta y \\ \Delta z \end{pmatrix}$$

Wherein $\rho_{(i)} - \rho_{(i),0}$ is the difference in between each measured distance ($\rho_{(i)}$) and the distance in between each device and an estimated first WAP geolocation for each of the N equations ($\rho_{(i),0}$). This difference is the error between the real distance between a device and the WAP (related to the real geolocation of the WAP) and the distance between a device and our first WAP geolocation estimation. Thus, this error should be minimized, and by calculating said difference, ($\Delta x, \Delta y, \Delta z$) will be a measure of the error in between a distance and an estimated distance.

Also, the partials of each equations for x, y and z are:

$$p_{(i),x} \approx \frac{x_{tx,0} - x_{(i)}}{\|\vec{r}_{tx,0} - \vec{r}_{(i)}\|}$$

Changing coordinate x by y or z for each coordinate, and the parameter (i) for each of the N equations, N being each different device or the same device but with different measurements and geolocation data and epoch, or a combination thereof.

As mentioned before, the bare minimum number of equations to obtain the WAP geolocation coordinates is three (N=3). However, for a better accuracy, the hardware bias introduced by the WAP may be estimated, thus introducing at least another parameter and, therefore, another equation (making N=4). In this case, the new set of equations could be defined as the following:

$$\begin{pmatrix} \rho_{(1)} - \rho_{(1),0} \\ \vdots \\ \rho_{(N)} - \rho_{(N),0} \end{pmatrix} = \begin{pmatrix} p_{(1),x} & p_{(1),y} & p_{(1),z} & 1 \\ \vdots & \vdots & \vdots & \vdots \\ p_{(N),x} & p_{(N),y} & p_{(N),z} & 1 \end{pmatrix} \cdot \begin{pmatrix} \Delta x \\ \Delta y \\ \Delta z \\ k \cdot c \end{pmatrix}$$

Wherein the parameter "k" estimates the implicit delay that the WAP introduces to the RTT measurements (and therefore, introducing an error in the measured distances $\rho_{(i)}$). It is multiplied by c (speed of light) to obtain the distance error introduced, and thus estimating the "k·c" parameter makes the obtained final WAP geolocation more accurate.

In both cases (using the parameter k or not), the system of N equations is solved and a solution for $(\Delta x, \Delta y, \Delta z)$ is found. A second WAP geolocation solution is therefore found as $\vec{r}_{tx}$, adding to the first WAP geolocation estimation the obtained solution.

$$\Delta \vec{r} = (\Delta x, \Delta y, \Delta z)$$

$$\vec{r}_{tx} = \vec{r}_{tx,0} + \Delta \vec{r}$$

This first solution is an approximation that has an error, which can be measured by how high or low the difference distances $(\Delta x, \Delta y, \Delta z)$ are. Therefore, the system can iterate to try and minimize $(\Delta x, \Delta y, \Delta z)$, by calculating more solutions that make its value go below a certain threshold (the final "error" in the WAP geolocation).

This way, a threshold may be set for $(\Delta x, \Delta y, \Delta z)$, and the calculation may be repeated by considering the first obtained solution as a second WAP geolocation estimation $\vec{r}_{tx,0}$, and repeating the same calculation to obtain a second WAP geolocation solution. If the newly calculated $(\Delta x, \Delta y, \Delta z)$ are still above the set threshold, a third iteration may be performed using the second WAP geolocation solution as a third WAP geolocation estimation $\vec{r}_{tx,0}$. And so forth until the calculated $(\Delta x, \Delta y, \Delta z)$ are below the set threshold (which could be in the order of millimeters, for example), thus obtaining a final WAP geolocation solution $\vec{r}_{tx}^j$ which may be accurate with an error approximately equal to the set threshold.

Alternatively, the obtaining of the WAP geolocation, using a geometric range formula could be performed by using other methods. An example would be the commonly known Bancroft method, that does not require a first WAP geolocation estimation. However, the non-inclusion of such first WAP geolocation estimation in this or other possible methods makes their results more inaccurate than the linearization of the previous example.

Upon obtaining the geolocation data of each WAP (corresponding to the received RTT measurements, geolocation data of the mobile device and timestamp), the CPF 3 stores the updated geolocation data of each WAP in the WAP geolocation database 4.

Therefore, the mobile devices 1 comprised in the system may continuously or periodically scan searching for WAPs within their range, in order to obtain RTT measurements from them, and, at the same time, continuously or periodically gather geolocation data of themselves, through their geolocation module 2. Once the RTT measurements and the geolocation data are obtained, they are both sent to the CPF (with the corresponding timestamp). This way, the system may continuously update the WAP geolocation data of each WAP, the data being stored in the WAP geolocation database 4. Thus, the obtained WAP geolocation data within the database is more accurate and continuously updated than the WAP position obtained using previously known methods.

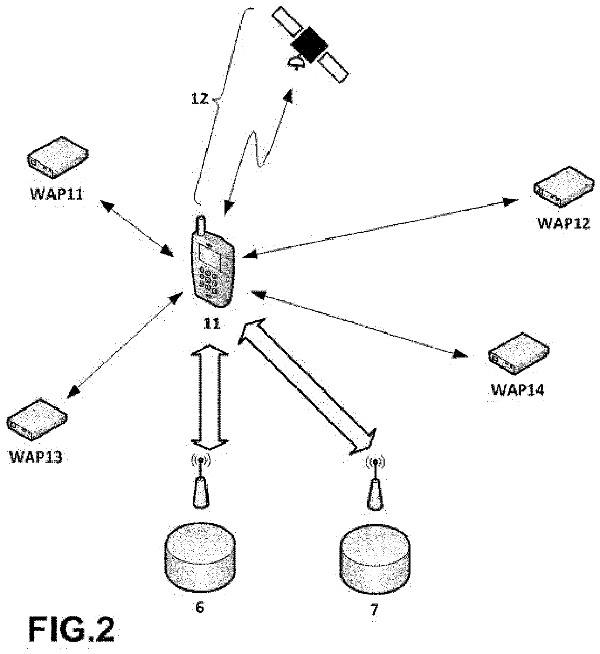

Figure 2 illustrates a second example of a system for geolocating a wireless access point.

In this case, a mobile device 11 such as the one from the example of Figure 2 is connected to a plurality of WAPs WAP11, WAP12, WAP13, WAP14, such as the ones of the example of Figure 2 (i.e., both the mobile device and the plurality of WAPs are RTT compatible devices), through a wireless network, which in this example is a WiFi network. The mobile device 11 comprises a geolocation module 12, which obtains geolocation data of the mobile device 11. It also comprises means for obtaining RTT measurements from each WAP it may be connected to.

In this case, the mobile device 11 comprises a WAP geolocation app which, upon request, obtains RTT measurements from each WAP, obtains geolocation data of the mobile device 11 (using the geolocation module 12), and timestamps it with its epoch (the time when the data is obtained).

Upon obtaining the RTT measurements, geolocation data of the mobile device and its epoch, the WAP geolocation app sends all the above to a first data storing system, which in this example is a first database (a WAP range data repository 6), which stores all the sent data.

Furthermore, the WAP geolocation app within the mobile device has means to retrieve, at any given time, the RTT measurements, geolocation data and epoch corresponding to a mobile device (the mobile device itself or another mobile device within the wireless network), stored within the first database 6, and to calculate the physical distance between the mobile device (corresponding to the retrieved data) and each WAP WAP11, WAP12, WAP13, WAP14, corresponding to each retrieved RTT measurements. Subsequently, the WAP geolocation app uses said calculated physical distances, and the geolocation data corresponding to the mobile device, to further obtain geolocation data of each WAP.

Upon obtaining the geolocation data of each WAP from the first database 6 (corresponding to the received RTT measurements, geolocation data of the mobile device and timestamp), the WAP geolocation app stores the updated geolocation data of each WAP in a second data storing system, which, in this example, comprises a WAP geolocation database 7, the WAP geolocation database 7 being connected to the mobile device 11. If the mobile device 11 and the data storing system (WAP geolocation database 7) are close enough, they may be wired (for example, through Ethernet technology) or may be connected through short-range communication technologies, for example, Bluetooth (e.g. BLE - Bluetooth Low Energy), NFC, Zigbee or WiFi technology. If the mobile device 11 and the WAP geolocation database 7 are far away, they may be connected through long-range wireless communication technologies such as GSM, GPRS, 3G, 4G, 5G or satellite technology or wired technologies (for example, through optical fiber, ADSL, etc.).

This way, in this second example, the steps of the method that were performed by the CPF 3 in the example of Figure 1, are performed by the WAP geolocation app within the mobile device 11, in what is known as a "distributed" mode. Therefore, the system of the example of Figure 2 needs a first database 6 to store the RTT measurements, geolocation data of the mobile device and epoch, corresponding to the mobile device, and a WAP geolocation database 7 to store the obtained geolocation data of each WAP. In this case, the obtaining of the geolocation data of each WAP is performed by the WAP geolocation app within the mobile device, instead of using a CPF 3 (as in the example of Figure 1).

A specific use of a system for geolocating wireless access points is its use within a system for geolocating mobile devices within an indoor environment.

More specifically, the mobile devices of said system for geolocating mobile devices may be of the type used in the system of Figures 1 or 2. An example may be that the mobile device is a smartphone, to be geolocated in an indoor environment.

In said system, the mobile devices may also comprise means for obtaining the geolocation of the device itself. More precisely, in this example, these means are embedded in a mobile device geolocation app within each mobile device. The app, upon user request of the geolocation of the mobile device, retrieves the WAP geolocation data of at least three of the WAPs which the device is connected to, from a WAP geolocation database. Said WAP geolocation database comprises geolocation data of the at least three WAPs, which has been obtained by using a system for geolocating a wireless access point.

The system for geolocating a wireless access point, used to obtain the geolocating data within the WAP geolocation database, may have been any embodiment or example of the present invention. For example, it may have been the example illustrated in Figure 1 or Figure 2.

Once the mobile device has obtained said geolocation data of at least three WAPs, the mobile device geolocation app obtains the geolocation of the mobile device by triangulating the position of the device itself.

This triangulation using three WAPs can be also performed in combination with other geolocation data such as GNSS if there is satellite visibility (i.e. outdoor environment).

In order to obtain the geolocation of a mobile device combining the WAP's geolocation data and geolocation data from a geolocation system (such as GNSS), a minimum of 4 measurements is needed, since whenever a satellite-type geolocation system's signal is used, at least 4 measurements (used to solve 4 equations, whose unknown parameters to be solved correspond to 3 spatial parameters and one time parameter corresponding to the geolocation system's clock) are needed. That means that any combination of signals that has at least one measurement from the geolocation system and the rest being more measurements from the geolocation system and/or WAP geolocation data, that sums up four or more measurements, is possible.

This way, by using the WAP's geolocation data found within the WAP geolocation database, obtained by using the system of the present invention, a mobile device can obtain a highly accurate and dynamic (i.e. updated in real time) geolocation of itself, both indoors and outdoors.

Indoors, the WAP's geolocation data found within the WAP geolocation database is used to perform an accurate geolocation of the mobile device, whereas outdoors, the same system may be used, or a combination of said system and the geolocation data of the mobile device obtained through its geolocation module connected to a geolocation system.

In an outdoors environment, this may be very useful, since geolocation systems such as GNSS may have an inaccurate performance, specifically in urban zones where lots of elements introduces errors to the geolocation data such systems deliver. Therefore, if signals from WAPs found in surrounding indoors environments are received, the mobile device can weigh the importance of both the WAP geolocation data and the mobile device's geolocation data (through its geolocation system) to obtain its own geolocation data, more precise than the one obtained through, for example, GNSS alone.

Furthermore, the mobile device geolocation app and the WAP geolocation app installed within the mobile device, can be programmed to be the embedded in a single app. Also, both apps can be executed in parallel (whether being embedded in the same single app or not), enabling the mobile device to obtain an accurate geolocation data of itself, while, at the same time, it obtains and sends geolocation data (obtained through its geolocation module), timestamp and RTT measurements to the CPF, which subsequently updates the corresponding WAP geolocation data found within the WAP geolocation Database.

This last case (simultaneously obtaining the mobile device geolocation by using a WAP geolocation Database with WAP geolocation data obtained by the system of the present invention, and updating the WAP geolocation data within said WAP geolocation Database) may be especially useful in the following scenario.

A scenario wherein the mobile device is outside of a building (using its geolocation module connected to a geolocation system, for example GNSS, to obtain geolocation data of itself) and the user carrying the mobile device approaches to an indoor environment (for example an office inside of said building). In this scenario, the building comprises several Wireless Access Points (for example, routers configured as WiFi Access Points, i.e. WAPs), and, when approaching the building, the mobile device receives WiFi signal from said WAPs, while still receiving its geolocation data from the geolocation module.

In the transition time while the mobile device is still outdoors, and receives both the building's indoor WiFi signal and its geolocation data from the geolocation system (in this example, GNSS) the following happens:

1. The WAP geolocation app of the mobile device updates the WAP's geolocation data, using the system of the present invention: the mobile device obtains its own, very accurate geolocation data from the geolocation system (in this example, GNSS), and sends its geolocation data, its epoch and RTT measurements corresponding to each WAP of the building to the CPF, thus subsequently updating the WAP geolocation database comprising WAP geolocation data, in real time.

2. The mobile device geolocation app of the mobile device obtains geolocation data of the mobile device by, for example, retrieving at least three sets of geolocation data of at least three WAPs from the WAP geolocation database comprising WAP geolocation data, and triangulating them. Alternatively, as previously described for an outdoors scenario, the mobile device geolocation app of the mobile device can obtain the geolocation data of itself by combining both geolocation data from its geolocation module (connected to a geolocation system such as, for example, GNSS) and a number of sets of geolocation data retrieved from the WAP geolocation Database.

This enables that, when the user carrying the mobile device moves indoors, that is, inside the building, and the geolocation system's signal is lost by the mobile device, the mobile device geolocation app can switch from geolocating itself by using its geolocation module (connected to a geolocation system such as, in this example, GNSS), to geolocating itself by using the WAP geolocation database comprising WAP geolocation data obtained by using the system of the present invention.

This switching can be performed in a seamless way (not seen by the user), with a significant increase in the accuracy of the geolocation of the mobile device when it is within the indoor area of the building.

More precisely, since a transition time exists when the mobile device is geolocating itself using two different methods (connecting to a geolocation system (for example, GNSS) and using the WAP geolocation database obtained by using the system of the present invention), the switching from one to the other can be performed without losing any information while both methods are being used, thus making it invisible to the user.

With respect to the apps cited in the present disclosure, it may be understood as a set of computer program instructions executable by a processor (such as a computer program) that may be stored in a physical storage means (a memory) and/or may also be carried by a carrier wave (the carrier medium). It can be any entity or device capable of carrying the program, such as electrical or optical, which can be transmitted via electrical or optical cable or by radio or other means. In this way, when the computer program is contained in a signal that can be transmitted directly by means of a cable or other device or means, the carrier means can be constituted by said cable or another device or means.

The memory may be adapted to store a set of computer program instructions, and the processor being adapted to execute these instructions stored in the memory in order to generate the various events and actions for which the device has been programmed.

The memory may be comprised in the processor (e.g. an EEPROM) or may be external. In the case of an external memory, it can be, for example, data storage means such as magnetic disks (e.g., hard disks), optical disks (e.g., DVD or CD), memory cards, flash memory (e.g., pen drives) or solid-state drives (SSD based on RAM, based on flash, etc.). On the other hand, these storage means can be part of the device itself and / or can be arranged remotely thereto, wired or wirelessly connected. In the case of being remotely arranged, the communication established between the device and the storage means can be ensured by, for example, username / password, cryptographic keys and / or by an SSL tunnel established in the communication between the device and the storage means.

The computer program may be in the form of source code, object code, a code intermediate source and object code such as in partially compiled form, or in any other form suitable for use in the implementation of the method. The carrier may be any entity or device capable of carrying the computer program.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

On the other hand, the methods executed by the cited apps may be also implemented by electronic means, that is, a purely electronic configuration. The electronic means may be a programmable electronic device such as a CPLD (Complex Programmable Logic Device), an FPGA (Field Programmable Gate Array) or an ASIC (Application-Specific Integrated Circuit).

In addition, a hybrid configuration between computing and electronic means is also possible. In this case, the system may comprise a memory and a processor to implement computationally part of its functionalities and certain electronic circuits to implement the remaining functionalities.

For reasons of completeness, various aspects of the present disclosure are set out in the following numbered clauses:

Clause 1. A method of obtaining data associated with a wireless access point by means of a wireless device connected to the wireless access point through a wireless network, the wireless device comprising a geolocation module, the method comprising:

- the wireless device obtaining its geolocation data using the geolocation module, when the wireless device is within the range of a geolocation system;
- the wireless device obtaining:

    • Travel time measurements of one or more signals sent from the wireless device to the wireless access point through the wireless network; or
    • physical distance measurements from the obtained Travel time measurements;

the distance or Travel time measurements being obtained at the same time as the geolocation data.

Clause 2. The method according to clause 1, further comprising:

- the wireless device time stamping its obtained geolocation data with the time when the geolocation data is obtained.

Clause 3. The method according to any of clauses 1 or 2, wherein the distance or Travel time measurements are obtained by using at least one of the following parameters:

- a Time of Arrival (ToA) parameter;
- a Time difference of Arrival (TdoA) parameter;
- a Round Trip Time (RTT) parameter.

Clause 4. The method according to any of clauses 1 to 3, wherein the obtained geolocation data of the wireless device comprises at least one of the following data:

- data relating to pseudo-ranges;

- data relating to the carrier phase range;
- data relating to Doppler frequency;
- data relating to Signal-to-Noise ratio or Carrier-to-Noise ratio;
- geolocation coordinates of the wireless device.

Clause 5. The method according to any of clauses 1 to 4, further comprising:

- the wireless device storing the obtained geolocation data of the wireless device in a first repository of wireless device geolocation data.

Clause 6. The method according to any of clauses 1 to 5, further comprising:

- the wireless device storing the obtained distance or Travel time measurements in a second repository of wireless access point distance or Travel time measurements.

Clause 7. The method according to any of clauses 1 to 6, further comprising:

- the wireless device searching for wireless access points within its range in order to obtain distance or Travel time measurements from them.

Clause 8. A non-transitory computer program product that causes a wireless device to perform a method according to any of clauses 1 to 7 of obtaining data associated to a wireless access point.

Clause 9. The non-transitory computer program product according to clause 8, embodied on a storage medium.

Clause 10. The non-transitory computer program product according to clause 8, carried on a carrier signal.

Clause 11. A wireless device for obtaining data associated with a wireless access point, the wireless device being connected to the wireless access point through a wireless network, the wireless device comprising:

- a communications module configured to connect the wireless device to the wireless access point through a wireless network;
- a geolocation module configured to obtain geolocation data of the wireless device when it is within the range of a geolocation system;
- means for obtaining:

    ∘ Travel time measurements of one or more signals sent by means of the communications module from the wireless device to the wireless access point through the wireless network; or
    ∘ distance measurements from the obtained Travel time measurements; the distance or Travel time measurements being obtained at the same time as the geolocation data.

Clause 12. A wireless device for obtaining data associated with a wireless access point, the wireless device being connected to the wireless access point through a wireless network, the wireless device comprising:

- a communications module configured to connect the wireless device to the wireless access point through a wireless network;
- a geolocation module configured to obtain geolocation data of the wireless device when it is within the range of a geolocation system;

the wireless device being configured to:

- obtain geolocation data using the geolocation module;
- obtain:

    • Travel time measurements of one or more signals sent by means of the communications module from the wireless device to the wireless access point through the wireless network; or
    • distance measurements from the obtained Travel time measurements; the distance or Travel time measurements being obtained at the same time as the geolocation data.

Clause 13. A wireless device for obtaining data associated with a wireless access point, the wireless device being connected to the wireless access point through a wireless network, the wireless device comprising:

- a communications module configured to connect the wireless device to the wireless access point through a wireless network;
- a geolocation module configured to obtain geolocation data of the wireless device when it is within the range of a geolocation system;
- a memory and a processor, embodying instructions stored in the memory and executable by the processor, the instructions comprising functionality to execute a method according to any of clauses 1 to 7 of obtaining data associated to a wireless access point.

Clause 14. A wireless device according to any of clauses 11 to 13, wherein the device is configured to:

- store the obtained geolocation data of the wireless device in a first repository of wireless device geolocation data; and/or
- store the obtained distance or Travel time measurements in a second repository of wireless access point distance or Travel time measurements.

Clause 15. The wireless device according to any of clauses 11 to 14, wherein it is selected from:

- a smartphone;
- a tablet;
- an Internet of Things (IoT) device;
- a GNSS receiver;
- an Electronic Control Unit (ECU) of a vehicle.

Clause 16. The wireless device according to any of clauses 11 to 15, wherein the wireless network is selected from:

- a WiFi network;
- a mobile communications network such as 3G, 4G or 5G;
- a Bluetooth type network;
- a Radio-Frequency (RF) wireless network.

Clause 17. A method of obtaining geolocation data of a wireless access point by means of a data processing system, the data processing system having access to:

- a first repository of wireless device geolocation data;
- a second repository of wireless access point physical distance or Travel time measurements;

wherein data comprised in the first and second repositories being obtained by a method according to any of clauses 1 to 7 of obtaining data associated with wireless access points;
the method of obtaining geolocation data of a wireless access point comprising:

- the data processing system retrieving from the second repository at least three distance or Travel time measurements associated with the wireless access point;
- the data processing system retrieving from the first repository the geolocation data of the corresponding wireless devices used to obtain the at least three distance or Travel time measurements;
- for each retrieved Travel time measurement, the data processing system obtaining the physical distance between the corresponding wireless device and the wireless access point from the Travel time measurement;
- the data processing system obtaining geolocation data of the wireless access point from the distances and the retrieved geolocation data of the corresponding wireless devices.

Clause 18. The method according to clause 17, further comprising:

- the data processing system storing the obtained geolocation data of the wireless access point in a third repository of wireless access point geolocation data.

Clause 19. The method according to any of clauses 17 or 18, wherein obtained geolocation data of the wireless access point comprises the geolocation coordinates of the wireless access point.

Clause 20. A non-transitory computer program product that causes a wireless device to perform a method according to any of clauses 17 to 19 of obtaining geolocation data of a wireless access point.

Clause 21. The non-transitory computer program product according to clause 20, embodied on a storage medium.

Clause 22. The non-transitory computer program product according to clause 20, carried on a carrier signal.

Clause 23. A data processing system for obtaining geolocation data of a wireless access point, the data processing system comprising:

- a communications module configured to access to:

  • a first repository of wireless device geolocation data;
  • a second repository of wireless access point physical distance or Travel time measurements;

  wherein data comprised in the first and second repositories being obtained by at least one wireless device according to any of clauses 11 to 16 for obtaining data associated with wireless access points;
- means for retrieving from the second repository at least three distance or Travel time measurements associated with the wireless access point;
- means for retrieving from the first repository the geolocation data of the corresponding wireless devices used to obtain the at least three distance or Travel time measurements;
- means for obtaining, for each obtained Travel time measurement, the physical distance between the corresponding wireless device and the wireless access point from the Travel time measurement;
- means for obtaining geolocation data of the wireless access point from the distances and the retrieved geolocation data of the corresponding wireless devices.

Clause 24. A data processing system for obtaining geolocation data of a wireless access point, the data processing system comprising:

- a communications module configured to access to:

  • a first repository of wireless device geolocation data;
  • a second repository of wireless access point physical distance or Travel time measurements;

  wherein data comprised in the first and second repositories being obtained by at least one wireless device according to any of clauses 11 to 16 for obtaining data associated with wireless access points;

the data processing system being configured to:

- retrieve from the second repository at least three distance or Travel time measurements associated to the wireless access point;
- retrieve from the first repository the geolocation data of the corresponding wireless devices used to obtain the at least three distance or Travel time measurements;
- obtain, for each obtained Travel time measurement, the physical distance between the corresponding wireless device and the wireless access point from the Travel time measurement;
- obtain geolocation data of the wireless access point from the physical distances and the retrieved geolocation data of the corresponding wireless devices.

Clause 25. A data processing system for obtaining geolocation data of a wireless access point, the data processing system comprising:

- a communications module configured to access to:

  • a first repository of wireless device geolocation data;
  • a second repository of wireless access point physical distance or Travel time measurements;

wherein data comprised in the first and second repositories being obtained by at least one wireless device according to any of clauses 11 to 16 for obtaining data associated with wireless access points;

- a memory and a processor, embodying instructions stored in the memory and executable by the processor, the instructions comprising functionality to execute a method according to any of clauses 17 to 19 of obtaining geolocation data of a wireless access point.

Clause 26. A method of geolocating a mobile device within an indoor environment, the mobile device being connected to at least three wireless access points through a wireless network, the mobile device having access to:

- a third repository of wireless access point geolocation data, wherein data comprised in the third repository being obtained by a method according to any of clauses 17 to 19 of obtaining geolocation data of wireless access points;

the method of geolocating the mobile device within an indoor environment comprising:

- the mobile device retrieving, from the third repository, geolocation data of at least three wireless access points to which the mobile device is connected;
- the mobile device obtaining its geolocation by triangulating the position of the mobile itself from the retrieved geolocation data of the at least three wireless access points.

Clause 27. A non-transitory computer program product that causes a mobile device to perform a method according to clause 26 of geolocating a mobile device within an indoor environment.

Clause 28. The non-transitory computer program product according to clause 27, embodied on a storage medium.

Clause 29. The non-transitory computer program product according to clause 27, carried on a carrier signal.

Clause 30. A mobile device for geolocating itself within an indoor environment, the mobile device comprising:

- a first communications module configured to connect the mobile device to wireless access points that are within the range of the mobile device through a wireless network;
- a second communications module configured to access to a third repository of wireless access point geolocation data, wherein data comprised in the third repository being obtained by a data processing system according to any of clauses 23 to 25 for obtaining geolocation data of wireless access points;
- means for retrieving, from the third repository, geolocation data of at least three wireless access points to which the mobile device is connected;
- means for obtaining its geolocation by triangulating the position of the mobile itself from the retrieved geolocation data of the at least three wireless access points.

Clause 31. A mobile device for geolocating itself within an indoor environment, the mobile device comprising:

- a first communications module configured to connect the mobile device to wireless access points that are within the range of the mobile device through a wireless network;
- a second communications module configured to access to a third repository of wireless access point geolocation data, wherein data comprised in the third repository being obtained by a data processing system according to any of clauses 23 to 25 for obtaining geolocation data of wireless access points;

the mobile device being configured to:

- retrieve, from the third repository, geolocation data of at least three wireless access points to which the mobile device is connected;
- obtain its geolocation by triangulating the position of the mobile itself from the retrieved geolocation data of the at least three wireless access points.

Clause 32. A mobile device for geolocating itself within an indoor environment, the mobile device comprising:

- a first communications module configured to connect the mobile device to wireless access points that are within the range of the mobile device through a wireless network;
- a second communications module configured to access to a third repository of wireless access point geolocation data, wherein data comprised in the third repository being obtained by a data processing system according to any of clauses 23 to 25 for obtaining geolocation data of wireless access points;

- a memory and a processor, embodying instructions stored in the memory and executable by the processor, the instructions comprising functionality to execute a method according to clause 26 of geolocating a mobile device within an indoor environment.

Clause 33. A method of geolocating a mobile device within an outdoor environment, the mobile device being connected to at least three wireless access points through a wireless network, the mobile device having access to:

- a third repository of wireless access point geolocation data, wherein data comprised in the third repository being obtained by a method according to clauses 17 to 19 of obtaining geolocation data of wireless access points;

the method of geolocating the mobile device within an outdoor environment comprising:

- the mobile device retrieving, from the third repository, geolocation data of at least three wireless access points to which the mobile device is connected;
- the mobile device obtaining geolocation data of itself if a geolocation module comprised in the mobile device is within the range of a geolocation system;
- the mobile device obtaining its geolocation by combining both geolocation data obtained by its geolocation module and the retrieved geolocation data of the wireless access points.

Clause 34. A non-transitory computer program product that causes a mobile device to perform a method according to clause 33 of geolocating a mobile device within an outdoor environment.

Clause 35. The non-transitory computer program product according to clause 34, embodied on a storage medium.

Clause 36. The non-transitory computer program product according to clause 34, carried on a carrier signal.

Clause 37. A mobile device for geolocating itself within an outdoor environment, the mobile device comprising:

- a first communications module configured to connect the mobile device to wireless access points through a wireless network;
- a second communications module configured to access to a third repository of wireless access point geolocation data, wherein data comprised in the third repository being obtained by a data processing system according to any of clauses 23 to 25 for obtaining geolocation data of wireless access points;
- means for retrieving, from the third repository, geolocation data of at least three wireless access points to which the mobile device is connected;
- a geolocation module configured to obtain geolocation data of the mobile device if the geolocation module is within the range of a geolocation system;
- means for obtaining the geolocation of the mobile device by combining both geolocation data obtained by its geolocation module and the retrieved geolocation data of the wireless access points.

Clause 38. A mobile device for geolocating itself within an outdoor environment, the mobile device comprising:

- a first communications module configured to connect the mobile device to wireless access points through a wireless network;
- a second communications module configured to access to a third repository of wireless access point geolocation data, wherein data comprised in the third repository being obtained by a data processing system according to any of clauses 23 to 25 for obtaining geolocation data of wireless access points;

the mobile device being configured to:

- retrieve, from the third repository, geolocation data of at least three wireless access points to which the mobile device is connected;
- obtain geolocation data of itself if a geolocation module comprised in the mobile device is within the range of a geolocation system;
- obtain its geolocation by combining both geolocation data obtained by its geolocation module and the retrieved geolocation data of the wireless access points.

Clause 39. A mobile device for geolocating itself within an outdoor environment, the mobile device comprising:

- a first communications module configured to connect the mobile device to wireless access points through a wireless network;
- a second communications module configured to access to a third repository of wireless access point geolocation data, wherein data comprised in the third repository being obtained by a data processing system according to any of clauses 23 to 25 for obtaining geolocation data of wireless access points;
- a memory and a processor, embodying instructions stored in the memory and executable by the processor, the instructions comprising functionality to execute a method according to clause 33 of geolocating a mobile device within an outdoor environment.

Clause 40. A system for geolocating a wireless access point, the system comprising:

- at least one wireless access point connected to a wireless network;
- a wireless device for obtaining data associated with a wireless access point according to clause 14 connected to the wireless access point through the wireless network;
- a data processing system for obtaining geolocation data of a wireless access point according to any of clauses 23 to 25.

Clause 41. The system according to clause 40, wherein the wireless device and the data processing system are embedded in a single device.

Clause 42. A method of obtaining geolocation data of a wireless access point by means of a data processing system, the data processing system having access to:

- a first repository of wireless device GNSS measurements;
- a second repository of wireless access point physical distance or Travel time measurements;

wherein the data comprised in the first and second repositories is obtained by means of a wireless device connected to the wireless access point through a wireless network, the wireless device comprising a geolocation module, and the wireless device performing the steps of:

- obtaining its GNSS measurements using the geolocation module, when the wireless device is within the range of a geolocation system;
- obtaining:

  • Travel time measurements of one or more signals sent from the wireless device to the wireless access point through the wireless network; or
  • physical distance measurements from the obtained Travel time measurements;

  the distance or Travel time measurements being obtained at the same time as the obtained GNSS measurements;
- storing the obtained GNSS measurements of the wireless device in the first repository of GNSS measurements; and/or
- storing the obtained distance or Travel time measurements in the second repository of wireless access point distance or Travel time measurements;

wherein the data processing system is remote from the wireless device, and wherein the method of obtaining geolocation data of a wireless access point comprises the steps of:

- the data processing system retrieving from the second repository at least three distance or Travel time measurements associated with the wireless access point;
- the data processing system retrieving from the first repository the GNSS measurements of the corresponding wireless device used to obtain the at least three distance or Travel time measurements;
- determining GNSS fixes of the wireless device based on the GNSS measurements retrieved from the first repository.
- for each retrieved Travel time measurement, the data processing system obtaining the physical distance between the corresponding wireless device and the wireless access point from the Travel time measurement;

- the data processing system obtaining geolocation data of the wireless access point from the distances and the GNSS fixes of the corresponding wireless device.

Clause 43. The method according to clause 42, wherein the data comprised in the first and second repositories is obtained by means of at least two wireless devices connected to the wireless access point through a wireless network, and wherein the data processing system retrieves data from the first and second repositories, corresponding to the two wireless devices.

Clause 44. The method according to clause 41, wherein the data comprised in the first and second repositories is obtained from a single wireless device located in different positions.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A method of obtaining geolocation data of a wireless access point by means of a data processing system, the data processing system having access to:

   - a first repository of wireless device GNSS measurements;
   - a second repository of wireless access point physical distance or Travel time measurements;

   wherein the data comprised in the first and second repositories is obtained by means of a wireless device connected to the wireless access point through a wireless network, the wireless device comprising a geolocation module, and the wireless device performing the steps of:

   - obtaining its GNSS measurements using the geolocation module, when the wireless device is within the range of a geolocation system;
   - obtaining:

     • Travel time measurements of one or more signals sent from the wireless device to the wireless access point through the wireless network; or
     • physical distance measurements from the obtained Travel time measurements;

   the distance or Travel time measurements being obtained at the same time as the obtained GNSS measurements;
   - storing the obtained GNSS measurements of the wireless device in the first repository of GNSS measurements; and/or
   - storing the obtained distance or Travel time measurements in the second repository of wireless access point distance or Travel time measurements;

   wherein the data processing system is remote from the wireless device, and wherein the method of obtaining geolocation data of a wireless access point comprises the steps of:

   - the data processing system retrieving from the second repository at least three distance or Travel time measurements associated with the wireless access point;
   - the data processing system retrieving from the first repository the GNSS measurements of the corresponding wireless device used to obtain the at least three distance or Travel time measurements;
   - determining GNSS fixes of the wireless device based on the GNSS measurements retrieved from the first repository;
   - for each retrieved Travel time measurement, the data processing system obtaining the physical distance between the corresponding wireless device and the wireless access point from the Travel time measurement; the data processing system obtaining geolocation data of the wireless access point from the distances and the GNSS fixes of the corresponding wireless device.

2. The method according to claim 1, wherein the data comprised in the first and second repositories are obtained by means of at least two wireless devices connected to the wireless access point through a wireless network, and wherein the data processing system retrieves data corresponding to the two wireless devices from the first and second repositories.

3. The method according to claims 1 or 2, wherein the data comprised in the first and second repositories are obtained in different instants from a single wireless device located in different positions.

4. The method according to any of claims 1 to 3, wherein the determining of the GNSS fixes of the wireless device is performed by calculating the GNSS fixes using at least one of the following type of GNSS fix calculations:

    - Data editing algorithms;
    - Precise Point Positioning algorithms;
    - Real Time Kinematic algorithms;
    - Post Processing Kinematic algorithms.

5. The method according to any of claims 2 to 4, wherein the determining of the GNSS fixes of the wireless devices is performed by calculating the GNSS fixes using a common GNSS fix calculation method for all wireless devices.

6. The method according to any of claims 1 to 5, wherein the GNSS measurements comprise the time of transmission of the GNSS signal sent to a satellite, and the time of reception of the GNSS signal received from the satellite signal.

7. The method according to claim 6 wherein the GNSS measurements further comprise pseudo ranges corresponding to the satellite.

8. A data processing system for obtaining geolocation data of a wireless access point, the data processing system comprising:

    - a communications module configured to access to:

        • a first repository of wireless device GNSS measurements;
        • a second repository of wireless access point physical distance or Travel time measurements;

    wherein the data comprised in the first and second repositories is obtained by means of a wireless device connected to the wireless access point through a wireless network, the wireless device comprising a geolocation module, and the wireless device performing the steps of:

        - obtaining its GNSS measurements using the geolocation module, when the wireless device is within the range of a geolocation system;
        - obtaining:

            • Travel time measurements of one or more signals sent from the wireless device to the wireless access point through the wireless network; or
            • physical distance measurements from the obtained Travel time measurements;

        the distance or Travel time measurements being obtained at the same time as the obtained GNSS measurements;

    the data processing system being configured to:

        - retrieve from the second repository at least three distance or Travel time measurements associated to the wireless access point;
        - retrieve from the first repository the GNSS measurements of the corresponding wireless device used to obtain the at least three distance or Travel time measurements;
        - for each retrieved Travel time measurement, obtain the physical distance between the corresponding wireless device and the wireless access point from the Travel time measurement;

- obtain geolocation data of the wireless access point from the distances and the GNSS fixes of the corresponding wireless device.

9. A data processing system according to claim 8, wherein the data comprised in the first and second repositories are obtained by means of at least two wireless devices connected to the wireless access point through a wireless network, and wherein the data processing system retrieves data corresponding to the two wireless devices from the first and second repositories.

10. A method of geolocating a mobile device within an indoor environment, the mobile device being connected to at least three wireless access points through a wireless network, the mobile device having access to:

- a third repository of wireless access point geolocation data, wherein data comprised in the third repository being obtained by a method according to any of claims 1 to 7 of obtaining geolocation data of wireless access points;

the method of geolocating the mobile device within an indoor environment comprising:

- the mobile device retrieving, from the third repository, geolocation data of at least three wireless access points to which the mobile device is connected;
- the mobile device obtaining its geolocation by triangulating the position of the mobile itself from the retrieved geolocation data of the at least three wireless access points.

11. A mobile device for geolocating itself within an indoor environment, the mobile device comprising:

- a first communications module configured to connect the mobile device to wireless access points that are within the range of the mobile device through a wireless network;
- a second communications module configured to access to a third repository of wireless access point geolocation data, wherein data comprised in the third repository being obtained by a data processing system according to claim 8 or 9 for obtaining geolocation data of wireless access points;

the mobile device being configured to:

- retrieve, from the third repository, geolocation data of at least three wireless access points to which the mobile device is connected;
- obtain its geolocation by triangulating the position of the mobile itself from the retrieved geolocation data of the at least three wireless access points.

12. A method of geolocating a mobile device within an outdoor environment, the mobile device being connected to at least three wireless access points through a wireless network, the mobile device having access to:

- a third repository of wireless access point geolocation data, wherein data comprised in the third repository being obtained by a method according to an of claims 1 to 7 of obtaining geolocation data of wireless access points;

the method of geolocating the mobile device within an outdoor environment comprising:

- the mobile device retrieving, from the third repository, geolocation data of at least three wireless access points to which the mobile device is connected;
- the mobile device obtaining GNSS measurements of itself if a geolocation module comprised in the mobile device is within the range of a geolocation system;
- the mobile device obtaining its geolocation by combining both GNSS measurements obtained by its geolocation module and the retrieved geolocation data of the wireless access points.

13. A mobile device for geolocating itself within an outdoor environment, the mobile device comprising:

- a first communications module configured to connect the mobile device to wireless access points through a wireless network;
- a second communications module configured to access to a third repository of wireless access point geolocation data, wherein data comprised in the third repository being obtained by a data processing system according to claim 8 or 9 for obtaining geolocation data of wireless access points;

the mobile device being configured to:

- retrieve, from the third repository, geolocation data of at least three wireless access points to which the mobile device is connected;
- obtain GNSS measurements of itself if a geolocation module comprised in the mobile device is within the range of a geolocation system;
- obtain its geolocation by combining both GNSS measurements obtained by its geolocation module and the retrieved geolocation data of the wireless access points.

WAP1

WAP2

WAP3

WAP4

2

1

4

3

FIG.1

**FIG.2**

Europäisches
Patentamt

European
Patent Office

Office européen
des brevets

# EUROPEAN SEARCH REPORT

**Application Number**

EP 20 19 4450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/095946 A1 (DEL CASTILLO MANUEL [ES]) 28 April 2011 (2011-04-28) * paragraph [0011] - paragraph [0014] * * paragraph [0024] * * paragraph [0035] - paragraph [0026] * * claims 1-5,8 * * figures 1,2,4 * | 1-13 | INV. H04W64/00 G01S5/14 |
| X | US 2010/331012 A1 (ZHANG YANG [CN]) 30 December 2010 (2010-12-30) * paragraph [0003] * * paragraph [0009] - paragraph [0014] * * paragraph [0051] - paragraph [0042] * * paragraph [0064] - paragraph [0066]; figures 1,4,9 * | 1,8, 10-13 | |
| X | EP 2 597 488 A2 (QUALCOMM INC [US]) 29 May 2013 (2013-05-29) * paragraph [0003] - paragraph [0008] * * paragraph [0048] - paragraph [0052] * * figures 1,3,6,9 * | 1,8, 10-13 | |
| X | US 2017/269190 A1 (HENRIKSSON DANIEL [SE] ET AL) 21 September 2017 (2017-09-21) * paragraph [0009] - paragraph [0012] * * paragraph [0024] - paragraph [0032] * * claims 23,31 * * figures 2,3,9,10 * | 1,8 | **TECHNICAL FIELDS SEARCHED (IPC)** H04W G01S |
| X | US 2013/307723 A1 (GARIN LIONEL JACQUES [US] ET AL) 21 November 2013 (2013-11-21) * paragraph [0006] * * paragraph [0088] - paragraph [0089] * * paragraph [0096] - paragraph [0099] * * figures 5,6,7 * | 1,8 | |

The present search report has been drawn up for all claims

| Place of search | Date of completion of the search | Examiner |
|---|---|---|
| Munich | 20 January 2021 | Schorgg, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# EP 3 790 328 A1

## ANNEX TO THE EUROPEAN SEARCH REPORT
## ON EUROPEAN PATENT APPLICATION NO.

EP 20 19 4450

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2021

| Patent document cited in search report | | Publication date | Patent family member(s) | | Publication date |
|---|---|---|---|---|---|
| US 2011095946 | A1 | 28-04-2011 | US 2011095946 A1<br>US 2012280858 A1 | | 28-04-2011<br>08-11-2012 |
| US 2010331012 | A1 | 30-12-2010 | EP 2449834 A1<br>US 2010331012 A1<br>WO 2011002372 A1 | | 09-05-2012<br>30-12-2010<br>06-01-2011 |
| EP 2597488 | A2 | 29-05-2013 | BR PI0411911 A<br>BR 122018004395 B1<br>CA 2530892 A1<br>CA 2896425 A1<br>CA 2896427 A1<br>CN 1833461 A<br>CN 1833462 A<br>CN 102223710 A<br>EP 1639854 A1<br>EP 2597488 A2<br>ES 2605403 T3<br>HU E030446 T2<br>JP 5774638 B2<br>JP 2007525093 A<br>JP 2011019252 A<br>JP 2013243700 A<br>KR 20060070493 A<br>MX PA05014048 A<br>RU 2372750 C2<br>RU 2009128895 A<br>WO 2005004527 A1 | | 08-08-2006<br>10-11-2020<br>13-01-2005<br>13-01-2005<br>13-01-2005<br>13-09-2006<br>13-09-2006<br>19-10-2011<br>29-03-2006<br>29-05-2013<br>14-03-2017<br>29-05-2017<br>09-09-2015<br>30-08-2007<br>27-01-2011<br>05-12-2013<br>23-06-2006<br>17-03-2006<br>10-11-2009<br>10-02-2011<br>13-01-2005 |
| US 2017269190 | A1 | 21-09-2017 | EP 3227710 A1<br>US 2017269190 A1<br>WO 2016089266 A1 | | 11-10-2017<br>21-09-2017<br>09-06-2016 |
| US 2013307723 | A1 | 21-11-2013 | CN 104396322 A<br>EP 2853122 A2<br>JP 2015525340 A<br>KR 20150018827 A<br>US 2013307723 A1<br>WO 2013176998 A2 | | 04-03-2015<br>01-04-2015<br>03-09-2015<br>24-02-2015<br>21-11-2013<br>28-11-2013 |

EPO FORM P0459

For more details about this annex : see Official Journal of the European Patent Office, No. 12/82